# EUROPÄISCHE PATENTSCHRIFT

(11) **EP 1 246 581 B1**
(45) Veröffentlichungstag und Bekanntmachung des Hinweises auf die Patenterteilung: **12.10.2005**
(21) Anmeldenummer: 00974233.9
(22) Anmeldetag: 22.11.2000
(51) Int. Cl.: A61C 13/00

(54) **WERKZEUGMASCHINE ZUR HERSTELLUNG VON GRUNDGERÜSTEN FÜR ZAHNERSATZ**
MACHINE TOOL FOR THE PRODUCTION OF BASE STRUCTURES FOR FALSE TEETH
MACHINE-OUTIL POUR LA PRODUCTION DE SUPERSTRUTURES DESTINEES A DES OPERATIONS DE DENTISTERIE RESTAURATRICE

(30) Priorität: 02.12.1999 EP 99811105
(43) Veröffentlichungstag der Anmeldung: 09.10.2002
(73) Patentinhaber: Eidgenössische Technische Hochschule Zürich, 8092 Zürich (CH)
(72) Erfinder: FILSER, Frank, CH-8102 Oberengstringen (CH); GAUCKLER, Ludwig, CH-8049 Zürich (CH); KOCHER, Peter, CH-4533 Riedholz SO (CH); LUETHY, Heinz, CH-2000 Neuchâtel (CH); SCHAERER, Peter, CH-8053 Zürich (CH)
(74) Vertreter: Breiter, Heinz
(86) Internationale Anmeldenummer: PCT/CH2000/000623
(87) Internationale Veröffentlichungsnummer: WO 2001/039691

(56) Entgegenhaltungen:
- EP-A- 0 402 720
- WO-A-91/18356
- WO-A-97/49524
- WO-A-98/36871
- US-A- 5 184 306

## Beschreibung

Die Erfindung bezieht sich auf eine automatische Werkzeugmaschine zur Herstellung von Grundgerüsten für Zahnersatz, insbesondere für Zahnkronen und/oder Zahnbrücken, von genauer dreidimensionaler Gestalt, welche Grundgerüste auf präparierten natürlichen und/oder künstlichen Zahnstümpfen befestigbar sind, wobei die Werkzeugmaschine einen Maschinenrahmen oder ein -gehäuse, einen Werkstückträger mit einer Rotationswelle für einen Rohling, wenigstens eine Digitalisierungseinheit, wenigstens eine Bearbeitungseinheit und eine elektronische Rechen- und Steuereinheit für alle Antriebsorgane umfasst. Weiter betrifft die Erfindung ein Verfahren zur Herstellung von positiven Grundgerüsten für Zahnersatz mit der automatischen Werkzeugmaschine.

Es sind eine Anzahl von Vorrichtungen und Verfahren zur Herstellung von künstlichen Zahnbrücken und Zahnkronen bekannt, welche gesamthaft als Zahnersatz bezeichnet werden. Grundsätzlich wird nach der zahnärztlichen Präparation ein Abdruck des Zahnstumpfes, der Zahnumgebung und des Kiefers angefertigt. Weiter ist ein System mit einer Mundkamera bekannt, welches die Bearbeitungsdaten aus den im Mund aufgenommenen Bildern ableitet, ohne den Weg über den Abdruck zu gehen.

Aus dem Abdruck kann über eine Gipsabformung ein sogenanntes Meistermodell hergestellt werden. Dieses Meistermodell zeigt die Situation im Mund des Patienten aus Gips. Der Zahntechniker modelliert auf diesem Meistermodell mit handwerklichem Geschick ein Modell des Grundgerüstes des Zahnersatzes in Wachs sowie bei niedriger Temperatur schmelzendem oder polymerisierend aushärtendem Kunststoff. Dieses Modell kann in feuerfesten Massen eingebettet, ausgeheizt und dann aus metallischen Werkstoffen gegossen werden. Das Wachsmodell, diese Bezeichnung wird auch beim Einsatz von Kunststoff verwendet, kann aber auch über mechanische Kopierbearbeitung im Massstab 1:1, vergrössert oder verkleinert, auf einen anderen Werkstoff übertragen werden. Vorliegenden interessiert nur die "Kopierbearbeitung", auch mit Vergrösserung oder Verkleinerung. Ein aus keramischem Material bestehendes Grundgerüst für Zahnkronen und/oder -brücken wird dichtgesintert und schrumpft dabei auf die endgültige Gestalt, und zwar derart, dass das Grundgerüst später präzis auf die Zahnstümpfe aufgesetzt werden kann. Durch Aufbringen einer Beschichtung aus Porzellan (Feldspaltkeramik) oder aus Kunststoff auf die äussere Oberfläche des Grundgerüstes kann bei Bedarf die Zahnkrone oder die Zahnbrücke individualisiert werden.

Die WO,A1 96/05782 beschreibt eine manuell bedienbare, analog arbeitende Vorrichtung zur Herstellung von Zahnfüllungen und ähnlichem. Die Vorrichtung beinhaltet zwei Spindeln zum Rotieren eines Modells und eines Rohlings. Die Rotation von Modell und Rohling muss synchron erfolgen. Senkrecht zur Rotationsachse von Modell und Rohling sind beim Modell ein Fühler und beim Rohling ein Bearbeitungswerkzeug angebracht. Rotieren Modell und Rohling, wird der Fühler manuell mit der Modelloberfläche in Kontakt gebracht. Gleichzeitig bearbeitet das Bearbeitungswerkzeug den Rohling entsprechend. Wird der Fühler über die gesamte Modelloberfläche bewegt, entsteht eine massstäbliche Kopie des Modells. Die hauptsächlichen Nachteile dieser Ausführungsform sind die nicht einstellbare Skalierung, d.h. fehlende Vergrösserungs- oder Verkleinerungsmöglichkeit, die manuelle Bedienung, die notwendige exakte Abstimmung von Fühler und Werkzeug, und die Probleme bei der Herstellung von Körpern mit Kavitäten (konkave Oberflächenform). Die in der WO,A1 96/05782 beschriebene Vorrichtung ist deshalb nicht geeignet zur automatisierten Herstellung von Zahnkronen und Zahnbrücken jeglicher Geometrie.

In der US,A 5184306 wird eine automatische Hochpräzisionsfertigung von Objekten mit komplexer und individueller Geometrie. Diese komplizierten Objekte können beispielsweise auch Zahnkronen oder Zahnbrücken sein, deren Digitaldatenwerten beispielsweise einer Bibliothek entnommene Idealgeometrien überlagert werden. Dann werden diese Idealgeometrien den Digitaldaten angepasst und verändert. Davon werden dann die Wege für die Bearbeitungsmaschine abgeleitet. Eine Vorrichtung ist auch nicht ansatzweise dargestellt.

Aus der EP,A2 0904742 und anderen Publikationen sind Vorrichtungen bekannt, welche aus zwei voneinander getrennten Geräten bestehen, wovon jedes eine Rechenanlage integriert hat. Das eine Gerät dient dem Digitalisieren der Oberflächen eines Meistermodells, das andere Gerät dem Bearbeiten der Zahnkrone und/oder der Zahnbrücke aus einem Rohling. In derartigen Vorrichtungen existieren zahlreiche Schnittstellen. Die Investitionskosten für derartige Vorrichtungen sind regelmässig hoch.

Das Digitalisieren der Oberflächen eines Meistermodells liefert annäherungsweise die kavitale Oberfläche des Grundgerüstes. Zementierungsspalte und okklusale Oberfläche des Grundgerüstes müssen beim Rechnen, z.B. via flächen- oder volumenrückgeführter, aufwendiger dreidimensionaler Modelle ergänzt werden. Die Arbeitsweise und Arbeitsmittel entsprechen somit nicht der traditionellen kunstvollen Arbeitsweise eines Zahntechnikers, benötigen jedoch dennoch speziell geschultes Fachpersonal.

Die JP-A-1058281 bzw. WO-A-9749524 beschreibt eine computergesteuerte Werkzeugmaschine mit einem gemeinsamen Antrieb für auswechselbare oder nacheinander einsetzbare Digitalisierungs- und Bearbeitungseinheiten. Das Vermessen und die Bearbeitung erfolgen mittels eines CAD/CAM-Systems (Computer-aided design, computer-aided manufacturing). Das Werkstück, vorzugsweise ein Rohling aus Dentalmaterial, oder das Modell wird in einer in x- und y-Richtung verschiebbaren Verschalung über eine Rotationswelle stirnseitig gehaltert. Das Vermessungs- oder Bearbeitungswerkzeug ist in z-Richtung verschiebbar auf einem Arm der Werkzeugmaschine montiert. Das Vermessen und Bearbeiten schliesst die gesamte Oberfläche des Modells bzw. des bearbeiteten Rohlings ein, also die okklusalen Aussenflächen und die kavitalen Innenflächen.

Auch andere Vorrichtungen arbeiten mit CAD oder CAD-Systemen. Sie müssen, ausgehend von den digitalisierten Daten, eine Flächenrückführung oder eine Rückführung der digitalisierten Oberflächen in CAD-Systeme durchführen. Die Nachbearbeitung der Daten, z.B. das Einfügen von standardisierten Zwischengliedern aus einer Bibliothek über CAD, ist dann möglich. Die Arbeit mit solchen System erfordert spezielle Kenntnisse und Fertigkeiten und ist durch die Verwendung von standardisierten Zwischengliedern hinsichtlich der Individualität für die Patientensituation eingeschränkt.

Das Dokument EP-A-1 088 620 gehört zum Stand der Technik entsprechend Art. 54(3) EPU. Es beschreibt eine Werkzeugmaschine, die sich von der hier definierten Erfindung dadurch unterscheidet, daß das Modell und der Rohling nicht auf die Enden ein und derselben Rotationswelle aufgespannt werden, sondern auf zwei verschiedenen Wellen.

Der vorliegenden Erfindung liegt die Aufgabe zugrunde, eine automatische Werkzeugmaschine der eingangs genannten Art und ein Verfahren zur Herstellung von positiven Grundgerüsten für Zahnersatz zu schaffen, welche eine sichere Herstellung mit einer kleinen und einfach zu bedienenden Vorrichtung erlauben. Vorrichtung und Verfahren sollen insbesondere für ein Grundgerüst aus einem porösen Keramikgrünling, nach dem Sintern hochfester Keramik, aber auch für Grundgerüste aus Kunststoff oder einem anderen, einfach zu bearbeitenden Werkstoff, geeignet sein.

In bezug auf die Werkzeugmaschine wird die Aufgabe erfindungsgemäss nach dem Kennzeichen von Patentanspruch 1 gelöst. Spezielle und weiterbildende Ausführungsformen der Werkzeugmaschine sind Gegenstand von abhängigen Ansprüchen.

Da die konkaven Innenflächen von Zahnkronen und/oder Zahnbrücken ohne Hinterschneidungen ausgebildet sein sollen, genügt es, dass vorzugsweise der Werkstückträger in x-, y- und z-Richtung, also den Richtungen eines rechtwinkligen räumlichen Koordinatensystem, bei ortsfester Bearbeitungseinheit bewegbar ist. Die Steuerung erfolgt so, dass ein lineares Verschieben des bevorzugt betrachteten Werkstückträgers in zwei oder in allen drei Richtungen gleichzeitig und schnell erfolgt. In der Praxis sind die Translationsachsen als Linearschienen ausgebildet.

Bei einer Bewegungseinheit für den Werkstückträger kann die Funktion Translationsachse in y-Richtung von der Rotationswelle des Werkstückträgers übernommen werden, indem diese drehmomentsicher verlänger- oder verkürzbar ausgebildet ist. Wahlweise kann die Rotationswelle auch als Ganzes in Axialrichtung verschiebbar sein.

Die erwähnte Rotationswelle des Werkstückträgers hat erfindungsgemäß beidends stirnseitige Aufspannvorrichtungen, einerseits für einen zu bearbeitenden Rohling, andernends für ein zahntechnisches Präparationsmodell. Der Rohling besteht beispielsweise aus wenigstens einem der Metalloxidpulver AL₂O₃, TiO₂, MgO, Y₂O₃ oder einem Zirkonoxidmischkristall. Für nähere Angaben bezüglich des Rohlings und seiner Behandlung wird auf die WO,A1 99/47065 verwiesen. Das zahntechnische Präparationsmodell ist in der Regel ein Positivmodell, kann jedoch auch ein Negativmodell sein.

Nach einer weiteren Variante kann die Werkzeugmaschine mehrere Bearbeitungseinheiten umfassen, zweckmässig sind zwei bezüglich der Rotationswelle gegenüberliegende Bearbeitungseinheiten vorgesehen, insbesondere oben - unten, vorn - hinten oder links - rechts, je nachdem die Rotationswelle wie üblich horizontal oder ausnahmsweise vertikal angeordnet ist.

Eine Bearbeitungseinheit einer Werkzeugmaschine umfasst je ein oder mehrere bevorzugt mehrere Bearbeitungswerkzeuge. Dabei sind diese Bearbeitungswerkzeuge, welche nicht gleich, sondern unterschiedlich für die Grob- und Feinbearbeitung ausgebildet sind, was sich auch in der Dimensionierung der Werkzeuge auswirkt. In der Regel sind zwei Bearbeitungswerkzeuge nach geometrischen Überlegungen angeordnet. Beispiele für Bearbeitungswerkzeuge im engeren Sinn sind Schleifstifte oder Fräser für die spanende Bearbeitung, oder strahlende Bearbeitungswerkzeuge für die Bearbeitung mittels Laser oder Elektroerrosion.

Da die Rohlinge Insbesondere aus keramischem, beim Sintern schrumpfendem Material bestehen, ist die Eingabe von Skalierungsfaktoren von wesentlicher Bedeutung. Dies kann manuell über eine Tastatur, welche an der Rechen- und Steuereinheit angeschlossen ist, erfolgen, vorzugsweise jedoch über ein angeschlossenes Lesegerät zur optischen, elektrischen, magnetischen oder mechanischen-taktilen Eingabe.

Konstruktiv ist es besonders vorteilhaft, für die Digitalisienungs- und Bearbeitungseinheit das gleiche mechanische, pneumatische, hydraulische oder elektromagnetische System auszubilden.

In bezug auf das Verfahren zur Herstellung von positiven Grundgerüsten für Zahnersatz wird die Aufgabe erfindungsgemäß nach dem kennzeichen von Patentanspruch 8 gelöst. Spezielle und weiterführende Ausführungsformen des Verfahrens ergeben sich aus den abhängigen Ansprüchen.

Der Skalierungsfaktor kann exakt 1 sein, in der Praxis liegt er jedoch meist zwischen 1 und 1.5, insbesondere zwischen 1,2 und 1,3. Er kann jedoch auch unterhalb von 1 liegen, dann wird das Präparationsmodell entsprechend verkleinert.

Vorzugsweise wird ein positives zahnärztliches Präparationsmodell digitalisiert. Es kann jedoch auch ein negatives Modell aufgespannt werden, wobei die digitalisierten Daten so umgerechnet werden, dass ein positiver bearbeiteter Rohling hergestellt wird.

Die kavitale und okklusale Digitalisierung und Umrechnung in Bearbeitungswege der Bearbeitungseinheit erfolgt vorzugsweise ohne Zusammenfügen in der elektronischen Steuereinheit, die Verwendung von CAD/CAM ist deshalb - wie bereits erwähnt - weder notwendig noch sinnvoll. Mit anderen Worten müssen sie nicht ausgehend von den digitalisierten Daten eine Flächenrückführung oder eine Rückführung der digitalisierten Oberflächen in CAD-Systeme durchführen. Eine Nachbearbeitung der Daten, z.B. das Einfügen von standardisierten Zwischengliedern aus einer Bibliothek über CAD erübrigt sich also. Die Arbeit an solchen Systemen würde spezielle Kenntnisse und Fertigkeiten erfordern und wäre durch die Verwendung von standardisierten Zwischengliedern hinsichtlich der Individualität für die Patentensituation eingeschränkt. Zum Digitalisieren der ganzen Oberfläche des Präparationsmodells wird vorerst in eine Grundeinstellung gebracht. Dann wird
- die Rotationswelle einmal um 180°, oder
- dreimal um 90°, oder
- fünfmal um 60° gedreht.

Selbstverständlich kann die Achse auch um andere, gleiche oder ungleiche Winkel gedreht werden, bis die gesamte Oberfläche des Präparationsmodells digitalisiert ist. Je nach Programm kann die Rotationswelle auch stufenweise hin und zurückgedreht werden.

Für die Herstellung des bearbeiteten Rohlings gilt entsprechendes, das Programm zum Drehen der Rotationswelle kann gleich oder unterschiedlich wie bei der Digitalisierung sein.

Die elektronische Steuereinheit kann auch die Bearbeitungswege für ein gespiegeltes Grundgerüst für Zahnersatz, Zahnkronen und/oder Zahnbrücken, berechnen und der Bearbeitungseinheit vorgeben.

Es hat sich als besonders vorteilhaft herausgestellt, das Verfahren mit fixierter Bearbeitungseinheit und dem Werkstückträger als einziger Bewegungseinheit in x-, y- und z-Richtung durchzuführen.

Die Erfindung wird dann anhand eines Ausführungsbeispiels einer automatischen Werkzeugmaschine, welche auch Gegenstand von abhängigen Ansprüchen ist, näher erläutert. Es zeigen schematisch:
- Fig. 1 eine Werkzeugmaschine mit den Hauptkomponenten in perspektivischer Darstellung,
- Fig. 2 eine Ansicht von vorn der Vorrichtung gemäss Fig. 1,
- Fig. 3 eine Draufsicht auf die Vorrichtung gemäss Fig. 1, und
- Fig. 4 einen Schnitt durch ein Grundgerüst einer Zahnbrücke.

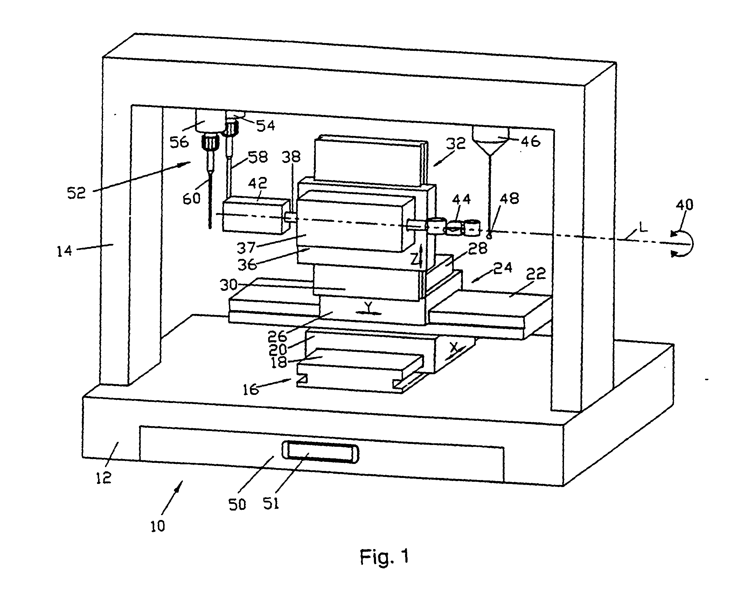

Eine Werkzeugmaschine 10 gemäss Fig. 1 bis 3 umfasst als tragende Teile einen Maschinenrahmen, bestehend aus einer Grundplatte 12 und einem Portal 14.

Auf der Grundplatte 12 ist eine erste Linearverschiebung 16 in x-Richtung befestigt, beispielsweise durch Verschrauben einer Führungsschiene 18. Eine doppelt abgewinkelte Läuferschiene 20 kann entlang der Führungsschiene 18 in x-Richtung mit nicht dargestellten Mitteln verschoben und äusserst exakt positioniert werden, beispielsweise mechanisch, pneumatisch, hydraulisch oder elektromagnetisch.

Auf der Läuferschiene 26 ist in y-Richtung, welche senkrecht zur x-Richtung verläuft, eine Führungsschiene 22 einer zweiten Linearverschiebung 24 starr befestigt. Entlang der Führungsschiene 22 ist eine entsprechend beidseits abgewinkelte Läuferschiene 26 mit ebenfalls nicht dargestellten Mitteln zur exakten Positionierung aufgebracht.

Auf der Läuferschiene 26 ist ein Befestigungswinkel 28 zur stabilen Halterung einer weiteren Führungsschiene 30 einer dritten Linearverschiebung 32 in z-Richtung, senkrecht zur x- und y-Richtung, mit einer ebenfalls beidseitig abgewinkelten Läuferschiene 34, welche ebenfalls mit nicht dargestellten Mitteln in eine exakte Position verschiebbar ist.

Auf der Läuferschiene 34 ist eine Rotationseinheit 36 mit einer vorliegend horizontalen Rotationswelle 38 in einem Wellenlager 37. Die Rotationswelle (38) ist auch als Ganzes bezüglich des Wellenlages (37) in Axialrichtung (L) verchiebbar. Diese ist durch Drehung im Uhrzeiger- oder Gegenuhrzeigersinn, durch einen Doppelpfeil 40 dargestellt, um eine Längsachse L in eine exakte Position drehbar. Einends ist ein quaderförmiger Rohling 42 aus sinterbarem Keramikmaterial aufgespannt, andemends das zahntechnische Präparationsmodell 44.

Schräg oberhalb des zahntechnischen Präparationsmodells 44 ist eine Digitalisierungseinheit 46 am Portal 14 des Maschinenrahmens befestigt. Diese umfasst einen im Bereich des Präparationsmodells 44 angeordneten Digitalisierungs-Taststift 48 aus einem zylindrischen Stift mit einer Kugel, welcher mechanisch-taktil arbeitet, indem die Oberfläche des Präparationsmodells 44 abgetastet wird. Wahlweise kann die Digitalisierungseinheit 46 auch mittels einer Strahlungsquelle, z.B. für Laser, arbeiten.

Die aufgenommenen Daten werden in eine elektronische Rechen- und Steuereinheit 50 geleitet, dort gespeichert und die Bearbeitungswege für eine ortsfeste Bearbeitungseinheit 52 festgelegt. Über ein Lesegerät 51 können die charakteristischen Daten des Rohlings 42 in die elektronische Rechen- und Steuereinheit 50 eingegeben werden. In Kombination mit der Bewegungseinheit findet eine relative Bewegung dieser Einheit mit dem Rohling 42 in bezug auf die ortsfeste Bearbeitungseinheit 52 statt.

Die direkt oder über einen gemeinsamen Träger am Portal 14 befestigte Bearbeitungseinheit 52 umfasst je eine Spindel 54,56 für das Grobbearbeitungswerkzeug 58 und das Feinbearbeitungswerkzeug 60. Beide Spindeln 54, 56 haben im vorliegenden Fall je einen Fräser oder einen Schleifstift.

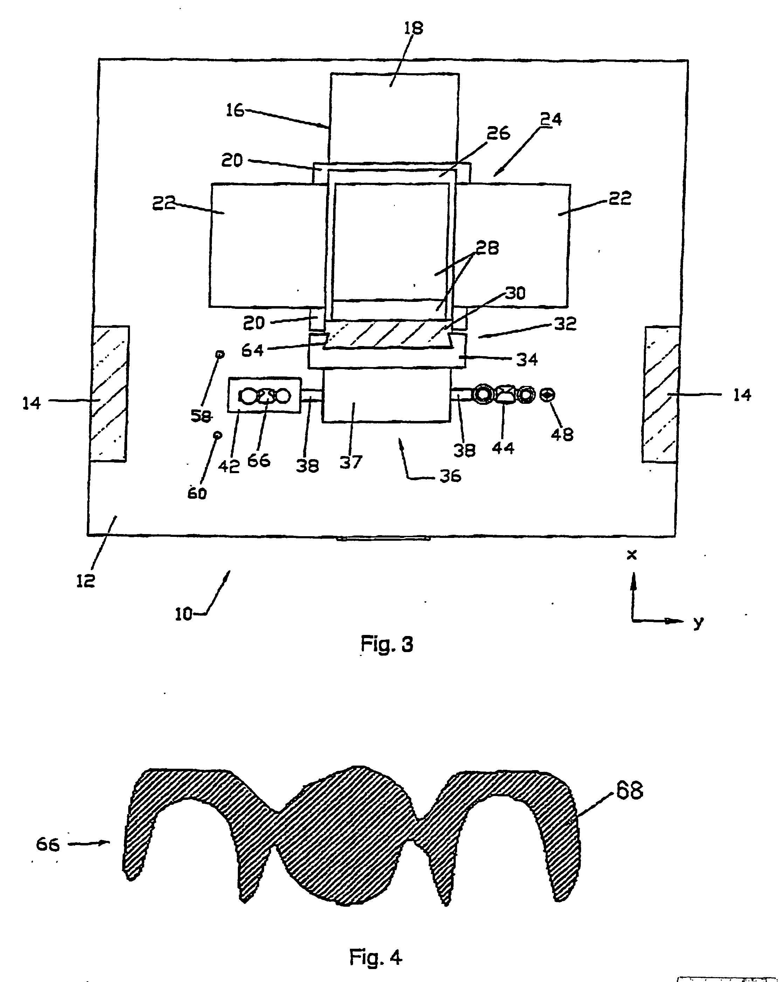

In Fig. 3 ist der obere Bogen des Portals 14 aus Übersichtlichkeitsgründen weggelassen.

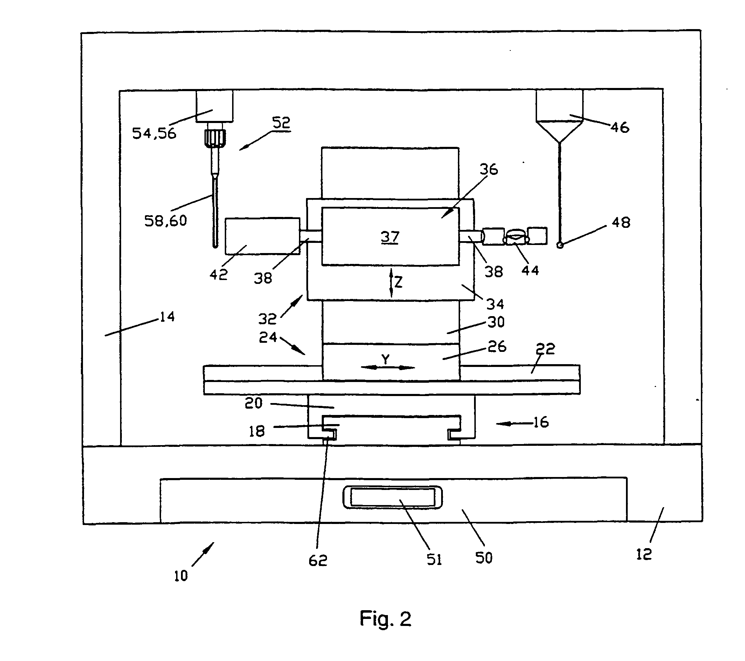

Die Stabilität der Läuferschienen 20, 26 und 34 wird beispielsweise durch eine Schwalbenschwanzform oder durch zwei seitliche Längsnuten 62 in den Seitenflächen der Führungsschienen 18, 22, 30 sichergestellt. In diese Längsnuten 62 greifen entsprechende Profilteile oder Nocken der Läuferschienen 20, 26, 34 ein (Fig. 2).

In Fig. 3 ist die Position des Grobbearbeitungswerkzeugs 58 und des Feinbearbeitungswerkzeugs 60 angedeutet, ebenso die Position des Taststiftes 48 oder der Strahlungsquelle. Weiter ist erkennbar, dass die eine Hälfte der vertikalen Führungsschiene 30 eine Schwalbenschwanzform 64 aufweist, die beiden abgewinkelten Schenkel der Läuferschiene 34 sind entsprechend ausgebildet.

Im quaderförmigen Rohling 42 ist der bearbeitete Rohling 66 angedeutet. Entgegen der in den meisten Fällen üblichen Praxis ist dieser kleiner angedeutet als das entsprechende Präparationsmodell 44, hätte also einen unter 1 liegenden Skalierungsfaktor. In der Praxis ist der bearbeitete Rohling 66 in den meisten Fällen grösser ausgebildet als das entsprechende Präparationsmodell 44, der Skalierungsfaktor liegt über 1, d.h. der bearbeitete Rohling 66 schrumpft beim Sintern auf das exakte Mass des Präparationsmodells 44.

Von erfindungswesentlicher Bedeutung sind die drei Translationsachsen, d.h. die Linearführungen 16, 24, 32 für die drei Raumrichtungen x, y, z, sie bilden zusammen mit der Rotationseinheit eine Bewegungseinheit, welche als Werkstückträger für den Rohling 42 dient. Wahlweise kann die Bearbeitungseinheit 52 die drei translatorische Bewegungseinheiten aufweisen. Dann wird nicht das Werkstück, der Rohling 42, zur Bearbeitungseinheit 52 geführt, sondern diese zum fix installierten Rohling 42.

An der Rechen- und Steuereinheit 50 sollen keine üblichen CAD-Tätigkeiten durchgeführt werden. Sie dient der Steuerung der gesamten Vorrichtung, d.h. der Steuerung der Bewegungen der Bewegungseinheit, der Datenaufnahme der Oberflächen durch die Digitalisierungseinheit 46, zum Ein- und Ausschalten der die Bearbeitungswerkzeuge 58, 60 halternden Spindeln 54, 56 und zur Skalierung der Oberflächendaten.

In Fig. 4 ist ein dichtgesinterter bearbeiteter Rohling 66 im Schnitt dargestellt, es handelt sich um ein Grundgerüst 68 für eine Zahnbrücke.

Die Werkzeugmaschine gemäss den Fig. 1 bis 3 arbeitet wie folgt.

Das positive Präparationsmodell 44 für das Grundgerüst 68 einer Zahnbrücke wird auf einer Stirnseite der Rotationswelle 38 befestigt. Auf der gegenüberliegenden Stirnseite wird der poröse, keramische Rohling 42 eingespannt. Mit der Digitalisierungseinheit 46 wird die vollständige Oberfläche des positiven Präparationsmodells 44 digital in die elektronische Rechen- und Steuereinheit 50 übernommen. Dazu wird zunächst die okklusale Oberfläche digitalisiert. Dann wird das Präparationsmodell 44 mittels der Rotationswelle 38 um einen bestimmten Winkel, vorliegend um 180°, gedreht. Anschliessend wird in gleicher Weise die kavitale Oberfläche des Präparationsmodells 44 erfasst. Ein Zusammenfügen der okklusalen und kavitalen Oberfläche des Präparationsmodells 44 in der Steuerungs- und Recheneinheit 50 ist nicht notwendig, weil die relative Position von okklusaler und kavitaler Oberfläche durch die Rotationswelle 38 festgelegt ist.

Durch die Eingabe eines Skalierungsfaktors von 1,2512 werden für die Digitaldaten der okklusalen und kavitalen Oberflächen vergrösserte Oberflächen abgeleitet und unter Berücksichtigung der geometrischen Daten des Grobbearbeitungswerkzeugs 58 und des Feinbearbeitungswerkzeugs 60 die Werkzeugwege berechnet. Ergebnis sind Bearbeitungsprogramme in zweckmässig folgender Reihenfolge:
- Grobbearbeitung für die okklusale Oberfläche (1),
- Grobbearbeitung für die kavitale Oberfläche (2),
- Feinbearbeitung für die okklusale Oberfläche (3) und
- Feinbearbeitung für die kavitale Oberfläche (4)

Die Reihenfolge kann auch eine andere sein, z.B. (2), (1), (4), (3) oder (1), (3), (2), (4).

Die geometrische Anordnung der Bearbeitungswerkzeuge 58, 60 ergeben die notwendigen Verschiebungen in x-, y- und z-Richtung oder eine Spiegelung der Daten für die Bearbeitungen.

Anschliessend erfolgt die Bearbeitung des Rohling 42. Unter Berücksichtigung der Verschiebungen/Spiegelungen wird zunächst die Grobbearbeitung für die okklusale Oberfläche nach dem entsprechenden Bearbeitungsprogramm mit dem Grobbearbeitungswerkzeug 58 durchgeführt. Dann wird die Rotationswelle 38 um 180° gedreht und dann unter Berücksichtigung der Verschiebungen/Spiegelungen die Grobbearbeitung für die kavitale Oberfläche nach dem entsprechenden Bearbeitungsprogramm mit dem Grobbearbeitungswerkzeug 58 durchgeführt. Darauf wird unter Berücksichtigung der Verschiebungen/Spiegelungen die Feinbearbeitung der kavitalen Oberfläche nach dem entsprechenden Bearbeitungsprogramm mit dem Feinbearbeitungswerkzeug 60 durchgeführt. Im Anschluss erfolgt eine Drehung der Rotationswelle 38 um 180°. Abschliessend wird unter Berücksichtigung der notwendigen Verschiebungen/Spiegelungen die Feinbearbeitung für die okklusale Oberfläche nach dem entsprechenden Bearbeitungsprogramm mit dem Feinbearbeitungswerkzeug 60 durchgeführt. Ergebnis ist ein bearbeiteter Rohling 66, welcher um den Skalierungsfaktor 1.2512 vergrössert dem Positivmodell entspricht.

Unter Verwendung geeigneter Bearbeitungswerkzeuge kann es einerseits vorteilhaft sein, nur einen Bearbeitungsschritt pro Oberfläche (okklusale und kavitale) vorzunehmen, andererseits können statt zwei auch drei oder mehr Bearbeitungsschritte pro Oberfläche durchgeführt werden.

Der bearbeitete Rohling wird von der Drehwelle 38 entfernt. Die anschliessend folgenden Arbeitsschritte sind das Brennen (Sintern) des bearbeiteten noch porösen keramischen Rohlings zu seiner vollen Dichte und die Individualisierung durch Aufbrennen von Feldspatkeramik (vgl. beispielsweise die WO,A 99/47065).

Wie erwähnt können durch spezielle lineare Abbildungen der Daten auch gespiegelte und/oder sogar verzerrte Kopien des Präparationsmodells aus dem Rohling herausgearbeitet werden.

## Patentansprüche

1. Automatische Werkzeugmaschine (10) zur Herstellung von Grundgerüsten (68) für Zahnersatz, insbesondere für Zahnkronen und/oder Zahnbrücken, von genauer dreidimensionaler Gestalt, welche Grundgerüste (68) auf präparierten natürlichen und/oder künstlichen Zahnstümpfen befestigbar sind, wobei die Werkzeugmaschine (10) einen Maschinenrahmen (12, 14) oder ein -gehäuse, einen Werkstückträger mit einer Rotationswelle (38) für einen Rohling (42), wenigstens eine Digitalisierungseinheit (46), wenigstens eine Bearbeitungseinheit (52) und eine elektronische Rechen- und Steuereinheit (50) für alle Antriebsorgane umfasst,
**dadurch gekennzeichnet, dass**
- der Werkstückträger auf einer Bewegungseinheit mit drei Translationsachsen in x-, y- und z-Richtung und die Bearbeitungseinheit (52) ortsfest am Maschinenrahmen (12, 14) oder-gehäuse gehaltert sind, oder
- der Werkstückträger ortsfest am Maschinenrahmen (12,14) oder - gehäuse und die Bearbeitungseinheit (52) auf einer als Bewegungseinheit mit drei Translationsachsen in x-, y- und z-Richtung gehaltert sind, oder
- der Werkstückträger und die Bearbeitungseinheit (52) auf je einer Bewegungseinheit mit drei Translationsachsen in x-, y- und z-Richtung gehaltert sind,
und die Rotationswelle (38) beidends stimseitige Aufspannvorrichtungen für einen Rohling (42) und ein zahntechnisches Präparationsmodeil (44) aufweist.

2. Werkzeugmaschine (10) nach Anspruch 1, **dadurch gekennzeichnet, dass** die Länge der Rotationswelle (38) drehmomentsicher veränderbar oder die Rotationswelle (38) bezüglich des Wellenlagers (37) als Ganzes in Axialrichtung (L) verschiebbar ist und eine Translationsachse, vorzugsweise in y-Richtung, bildet.

3. Werkzeugmaschine (10) nach Anspruch 1 oder 2, **dadurch gekennzeichnet, dass** sie mehrere Digitalisierungs- (46) und/oder Bearbeitungseinheiten (52) umfasst, vorzugsweise zwei bezüglich der Rotationswelle (38) diagonal gegenüberliegende, insbesondere oben - unten, vorn - hinten, oder links - rechts.

4. Werkzeugmaschine (10) nach einem der Ansprüche 1 bis 3 **dadurch gekennzeichnet, dass** eine Bearbeitungseinheit (52) mehrere Bearbeitungswerkzeuge (58, 60) hat, welche geometrisch abgestimmt sind, vorzugsweise je eines für die Grob- und eines für die Feinbearbeitung.

5. Werkzeugmaschine (10) nach einem der Ansprüche 1 bis 4, **dadurch gekennzeichnet, dass** die Bearbeitungseinheit (52) mit spanenden oder strahlenden Bearbeitungswerkzeugen (58, 60) ausgestattet ist, insbesondere mit Schleifstiften, Fräsern oder Strahlungsquellen für Laser oder Elektroerrosion.

6. Werkzeugmaschine (10) nach einem der Ansprüche 1 bis 5, **dadurch gekennzeichnet, dass** die elektronische Rechen- und Steuereinheit (50) ein optisches, elektrisches, magnetisches oder mechanisch-taktiles Lesegerät (51) für die Eingabe von Skalierungsfaktoren aufweist.

7. Werkzeugmaschine (10) nach einem der Ansprüche 1 bis 6, **dadurch gekennzeichnet, dass** für die Digitalisierungs- (46) und die Bearbeitungseinheit (52) das gleiche mechanische, pneumatische, hydraulische oder elektromagnetische Antriebssystem ausgebildet ist.

8. Verfahren zur Herstellung von positiven Grundgerüsten (68) für Zahnersatz mit einer automatischen Werkzeugmaschine (10), welche einen Maschinenrahmen oder - gehäuse, einen Werkstückträger mit einer Rotationswelle (38) für einen Rohling (42), wenigstens eine Digitalisierungseinheit (46), wenigstens eine Bearbeitungseinheit und eine elektronische Rechen- und Steuereinheit (50) für alle Antriebsorgane umfasst,
**dadurch gekennzeichnet, dass**
die Digitalisierung des Präparationsmodells (44) und die Bearbeitung des Rohlings (42) zeitlich entkoppelt auf der Werkzeugmaschine (10) mit gleichzeitig beidends stirnseitig auf der Rotationswelle (38) aufgespanntem Rohling (42) und zahntechnischem Präparationsmodell (44) durchgeführt werden, wobei vor der Bearbeitung des Rohlings (42) aus den ermittelten und gespeicherten Digitalisierungsdaten und einem vorgegebenen, materialspezifischen Skalierungsfaktor die Bearbeitungswege für den Rohling (42) berechnet werden.

9. Verfahren nach Anspruch 8, **dadurch gekennzeichnet, dass** die charakteristischen Rohlingsdaten in die elektronische Rechen- und Steuereinheit (50) eingegeben sowie das zahntechnische Präparationsmodell (44) des Grundgerüstes (68) und bei entsprechender Gestaltung der Rotationswelle (38) der Rohling (42) aufgespannt werden, wenigstens die kavitalen Innenoberflächen des Präparationsmodells (44) vollständig digitalisiert werden, die digital aufgenommenen Oberflächendaten in Bearbeitungswege für die Bearbeitungseinheit (52) umgerechnet werden, der Rohling (42) in konsekutiven Schritten bis zum Erreichen der gespeicherten Endform bearbeitet wird, und der bearbeitete Rohling (66) und das Präparationsmodell (44) von der Werkzeugmaschine (10) genommen werden.

10. Verfahren nach Anspruch 8 oder 9, **dadurch gekennzeichnet, dass** ein positives Präparationsmodell (44) digitalisiert wird.

11. Verfahren nach einem der Ansprüche 8 bis 10, **dadurch gekennzeichnet, dass** eine okklusale und kavitale Digitalisierung des Präparationsmodells (44) und eine Umrechnung in Bearbeitungswege ohne Zusammenfügen der okklusalen und kavitalen Oberfläche in der elektronischen Rechen- und Steuereinheit (50) erfolgt.

12. Verfahren nach einem der Ansprüche 8 bis 11, **dadurch gekennzeichnet, dass** die Rotationswelle (38) zum Digitalisieren der ganzen Oberfläche des Präparationsmodells (44) und/oder zur Herstellung des bearbeiteten Rohlings (66) aus der Grundeinstellung jeweils um 180°, um 90° oder um 60° gedreht wird.

13. Verfahren nach einem der Ansprüche 8 bis 12, **dadurch gekennzeichnet, dass** die elektronische Rechen- und Steuereinheit (50) die Bearbeitungswege für ein gespiegeltes Grundgerüst (68) für Zahnersatz berechnet und der Bearbeitungseinheit (52) vorgibt.

14. Verfahren nach einem der Ansprüche 8 bis 13, **dadurch gekennzeichnet, dass** vorerst die Grobbearbeitung der okklusalen, anschliessend der kavitalen Oberfläche des bearbeiteten Rohlings (66), dann dessen Feinbearbeitung der okklusalen, anschliessend der kavitalen Oberfläche erfolgt, wobei vorzugsweise mit bezüglich der Rotationswelle (38) diagonal gegenüberliegendem groben und feinen Bearbeitungswerkzeug (58, 60) gearbeitet wird.

15. Verfahren nach einem der Ansprüche 8 bis 14, **dadurch gekennzeichnet, dass** mit fixierter Bearbeitungseinheit (52) und dem Träger des Werkstücks, des Rohlings (42), als einziger Bewegungseinheit gearbeitet wird.

## Claims

1. Automatic machine tool (10) for production of basic structures (68) for dental prostheses, in particular for dental crowns and/or bridges, of precise three-dimensional shape, which basic structures (68) can be attached to prepared natural and/or artificial dental stumps, where the machine tool (10) has a machine frame (12, 14) or housing, a workpiece carrier with a rotation shaft (38) for a blank (42), at least one digitisation unit (46), at least one machining unit (52) and an electronic calculating and control unit (50) for all drive elements,
**characterised in that**
- the workpiece carrier is held on a movement unit with three translation axes in the x, y and z direction and the machining unit (52) is held stationary on the machine frame (12,14) or housing, or
- the workpiece carrier is held stationary on the machine frame (12, 14) or housing and the machining unit (52) is held on a movement unit with three translation axes in the x, y and z direction, or
- the workpiece carrier and machining unit (52) are each held on a movement unit with three translation axes in the x, y, or z direction.

2. Machine tool (10) according to claim 1, **characterised in that** the length of the rotation shaft can be modified torque-secure or the rotation shaft (38) is movable as a whole in the axial direction (L) in relation to the shaft bearing (37) and forms a translation axis, preferably in the y direction.

3. Machine tool (10) according to claim 1 or 2, **characterised in that** it comprises several digitisation units (46) and/or machining units (52), preferably two lying diagonally opposite each other in relation to the rotation shaft (38), in particular top-bottom, front-rear or left-right.

4. Machine tool (10) according to any of claims 1 to 3, **characterised in that** a machining unit (52) has several machining tools (58, 60) geometrically matched, preferably one for the coarse and one for the fine machining.

5. Machine tool (10) according to any of claims 1 to 4, **characterised in that** the machining unit (52) is equipped with material removal or radiant machining tools (58, 60) in particular with grinding pins, milling cutters or radiation sources for laser or electro-erosion.

6. Machine tool (10) according to any of claims 1 to 5, **characterised in that** the electronic calculating and control unit (50) has an optical, electrical, magnetic or mechanical tactile read device (51) for entering scaling factors.

7. Machine tool (10) according to any of claims 1 to 6, **characterised in that** the same mechanical, pneumatic, hydraulic or electromagnetic drive system is formed for the digitisation unit (46) and the machining unit (52).

8. Process for production of positive basic structures (68) for dental prostheses with an automatic machine tool (10) which has a machine frame or housing, a workpiece carrier with a rotation shaft (38) for a blank (42), at least one digitisation unit (46), at least one machining unit and an electronic calculating and control unit (50) for all drive elements,
**characterised in that**
the digitisation of the preparation model (44) and the machining of the blank (42) take place temporally decoupled on the machine tool (10) with blank (42) and dental preparation model (44) clamped simultaneously on the two face ends of the rotation shaft (38), where before machining of the blank (42) the machining paths for the blank (42) are calculated from the digitisation data determined and stored and a prespecified material-specific scaling factor.

9. Process according to claim 8, **characterised in that** the characteristic blank data is entered in the electronic calculating and control unit (50), and the dental preparation model (44) of the basic structure (68) and, with the appropriate design of rotation shaft (38), the blank (42) is clamped, at least the cavital inner surfaces of the preparation model (44) are fully digitised, the digitally recorded surface data converted into machining paths for the machining unit (52), the blank (42) machined in consecutive steps until the stored end form is achieved, and the machined blank (66) and the preparation model (44) taken from the machine tool (10).

10. Process according to claim 8 or 9, **characterised in that** a positive preparation model (44) is digitised.

11. Process according to any of claims 8 to 10, **characterised in that** an occlusal and a cavital digitisation of the preparation model (44) and conversion into machining paths take place in the electronic calculation and control unit (50) without joining of the occlusal and cavital surfaces.

12. Process according to any of claims 8 to 11, **characterised in that** for digitising the entire surface of the preparation model (44) and/or production of the machined blank (66), the rotation shaft (38) is turned from the base position through 1800, 90° or 60°.

13. Process according to any of claims 8 to 12, **characterised in that** the electronic calculating and control unit (50) calculates the machining paths for a mirror-image basic structure (68) for a dental prosthesis and passes these to the machining unit (52).

14. Process according to any of claims 8 to 13, **characterised in that** first the coarse machining of the occlusal then of the cavital surface of the machined blank (66) take place, then the fine machining of the occlusal and then the cavital surface, where preferably coarse and fine machine tools (58, 60) lying diagonally opposite each other in relation to the rotation shaft (38) are used.

15. Process according to any of claims 8 to 14, **characterised in that** it uses the fixed machining unit (52) and the carrier of the workpiece, the blank (42), as the sole movable unit.

## Revendications

1. Machine outil automatique (10) de fabrication de structures de base (68) de restauration dentaire, en particulier de couronnes dentaires et/ou de bridges dentaires, de configuration tridimensionnelle précise, structures de base (68) qui peuvent être fixées sur des fragments dentaires naturels et/ou artificiels préparés, la machine outil (10) comprenant un bâti (12, 14) ou un carter de machine, un support de pièce à traiter à arbre de rotation (38) pour porter une ébauche (42), au moins une unité de numérisation (46), au moins une unité d'usinage (52) et une unité électronique (50) de calcul et de commande pour tous les organes d'entraînement,
**caractérisée en ce que**
- le support de pièce à traiter est monté sur une unité de déplacement à trois axes de translation dans les directions x, y et z et l'unité d'usinage (52) est montée de façon fixe sur le bâti (12, 14) ou le carter de machine, ou
- le support de pièce à traiter est monté de façon fixe sur le bâti (12, 14) ou le carter de machine, et l'unité d'usinage (52) est montée sur une unité de déplacement à trois axes de translation dans les directions x, y et z, ou
- le support de pièce à traiter et l'unité d'usinage (52) sont montés chacun sur une unité de déplacement à trois axes de translation dans les directions x, y et z,
et l'axe de rotation (38) comporte des dispositifs de montage sur ses deux côtés frontaux pour une ébauche (42) et un modèle de préparation (44) de technique dentaire.

2. Machine outil (10) selon la revendication 1 , **caractérisée en ce que** la longueur de l'axe de rotation (38) est modifiable en maintenant le couple ou l'axe de rotation (38) peut être coulissé globalement en direction axiale (L) par rapport au palier (37) d'arbre et constitue un axe de translation, de préférence en direction y.

3. Machine outil (10) selon la revendication 1 ou 2, **caractérisée en ce qu'**elle comprend plusieurs unités de numérisation (46) et/ou d'usinage (52), de préférence deux unités diagonalement opposées par rapport à l'axe de rotation (38), en particulier vers le haut et le bas, vers l'avant et l'arrière ou vers la gauche et la droite.

4. Machine outil (10) selon l'une quelconque des revendications précédentes, **caractérisée en ce qu'**une unité d'usinage (52) comprend plusieurs outils d'usinage (58, 60) qui sont adaptés géométriquement, de préférence respectivement, un premier pour le dégrossissage et un autre pour le finissage.

5. Machine outil (10) selon l'une quelconque des revendications précédentes, **caractérisée en ce que** l'unité d'usinage (52) est équipée d'outils d'usinage (58, 60) par enlèvement de copeaux ou par rayonnement, en particulier de meules sur tiges, de fraises ou de sources de rayonnement pour effet laser ou électroérosion.

6. Machine outil (10) selon l'une quelconque des revendications précédentes, **caractérisée en ce que** l'unité électronique (50) de calcul et de commande comprend un dispositif de lecture optique, électrique, magnétique ou mécaniquement tactile (51) pour l'entrée de facteurs de mise à l'échelle.

7. Machine outil (10) selon l'une quelconque des revendications précédentes, **caractérisée en ce que** le même système d'entraînement mécanique, pneumatique, hydraulique ou électromagnétique est réalisé pour l'unité de numérisation (46) et l'unité d'usinage (52).

8. Procédé de fabrication de structures de base positives (68) pour restauration dentaire au moyen d'une machine outil automatique (10) qui comprend un bâti ou carter de machine, un support de pièce à traiter à arbre de rotation (38) pour une ébauche (42), au moins une unité de numérisation (46), au moins une unité d'usinage et une unité électronique (50) de calcul et de commande pour tous les organes d'entraînement,
**caractérisé en ce que**
la numérisation du modèle de préparation (44) et l'usinage de l'ébauche (42) sont exécutés de façon désaccouplée dans le temps sur la machine outil (10), l'ébauche (42) et le modèle de préparation (44) de techniques dentaires étant tous deux montés simultanément chacun sur un côté frontal sur l'arbre de rotation (38), les trajectoires d'usinage pour l'ébauche (42) étant calculées avant l'usinage de l'ébauche (42) à partir des données de numérisation déterminées et mémorisées et d'un facteur d'échelle prédéfini, spécifique à la matière.

9. Procédé selon la revendication 8, **caractérisé en ce que** les données caractéristiques de l'ébauche sont entrées dans l'unité électronique (50) de calcul et de commande et que le modèle de préparation (44) de techniques dentaires de la structure de base (68) ainsi que l'ébauche (42) sont montés pour une configuration correspondante de l'arbre de rotation (38), **en ce qu'**au moins les surfaces internes cavitales du modèle de préparation sont totalement numérisées, les données de surface détectées numériquement sont transformées par calcul en trajectoires d'usinage pour l'unité d'usinage (52), l'ébauche (42) est usinée par étapes successives jusqu'à ce que la forme finale mémorisée soit atteinte, et l'ébauche usinée (66) et le modèle de préparation (44) sont enlevés de la machine outil (10).

10. Procédé selon la revendication 8 ou 9, **caractérisé en ce qu'**un modèle de préparation positif (44) est numérisé.

11. Procédé selon l'une des revendications 8 à 10, **caractérisé en ce que** l'unité électronique (50) de calcul et de commande effectue une numérisation occlusale et cavitale du modèle de préparation (44) et une transformation par calcul en trajectoires d'usinage sans rapprochement de la surface occlusale et cavitale.

12. Procédé selon l'une quelconque des revendications 8 à 11, **caractérisé en ce que** l'arbre de rotation (38) est respectivement tourné de 180°, de 90° ou de 60° à partir de la position de base pour la numérisation de la surface totale du modèle de préparation (44) et/ou pour la fabrication de l'ébauche usinée (66).

13. Procédé selon l'une quelconque des revendications 8 à 12, **caractérisé en ce que** l'unité (50) de calcul et de commande calcule les trajectoires d'usinage pour une structure de base (68) de restauration dentaire symétrique en miroir et les communique à l'unité d'usinage (52).

14. Procédé selon l'une quelconque des revendications 8 à 13, **caractérisé en ce que**, dans l'ordre, les dégrossissages de la surface occlusale de l'ébauche usinée (66) puis de sa surface cavitale sont suivis par le finissage de sa surface occlusale, puis de sa surface cavitale, en usinant de préférence au moyen des outils de dégrossissage et de finissage (58, 60) diagonalement opposés par rapport à l'axe de rotation (38).

15. Procédé selon l'une quelconque des revendications 8 à 14, **caractérisé en ce que** l'usinage s'effectue au moyen d'une unité d'usinage fixe (52) alors que le support de pièce à traiter et l'ébauche (42) forment une unité de déplacement unique.
